# FASCICULE DE BREVET EUROPEEN

(11) **EP 2 693 286 B1**
(45) Date de publication et mention de la délivrance du brevet: **23.05.2018**
(21) Numéro de dépôt: 13176781.6
(22) Date de dépôt: 17.07.2013
(51) Int. Cl.: B64G 1/36, B64G 1/26, B64G 1/24

(54) **Dispositif et procédé pour desorbitation de satellite**
Vorrichtung und Verfahren zum Manövrieren eines Satelliten auf den Friedhofsorbit
Device and method for de-orbiting a satellite

(30) Priorité: 03.08.2012 FR 1202180
(43) Date de publication de la demande: 05.02.2014
(73) Titulaire: THALES, 92400 Courbevoie (FR)
(72) Inventeur: Forestier, Damien, 06580 Pegomas (FR); Houis, Laurent, 06150 Cannes la Bocca (FR); Herbiniere, Sébastien, 06210 Mandelieu (FR)
(74) Mandataire: Lopez, Frédérique

(56) Documents cités:
- US-A- 6 024 327
- US-A1- 2005 133 671
- US-A1- 2007 023 579
- US-B1- 6 237 876
- ASHIDA H ET AL: "Design of Tokyo Tech nano-satellite Cute-1.7+APD II and its operation", ACTA ASTRONAUTICA, PERGAMON PRESS, ELMSFORD, GB, vol. 66, no. 9-10, 1 mai 2010 (2010-05-01) , pages 1412-1424, XP026939209, ISSN: 0094-5765, DOI: 10.1016/J.ACTAASTRO.2009.10.035 [extrait le 2009-12-03]

## Description

### Domaine technique

L'invention concerne le domaine des satellites de télécommunication et en particulier la désorbitation des satellites en orbite basse.

### Etat de la technique

En fin de vie, tout satellite d'une constellation de satellites doit être désorbité. Le système de contrôle d'attitude et d'orbite des satellites de la constellation contient nominalement un mode servant pour la désorbitation et appelé « Orbit Control Mode » en anglais (OCM).

Si consécutivement à une panne majeure, le satellite est envoyé en mode survie « Safe Hold Mode » en anglais (SHM) et ne peut plus atteindre le mode de désorbitation OCM, le satellite ne peut plus alors être désorbité. En effet, le mode survie SHM consiste en un mode de contrôle d'attitude où le satellite est maintenu pointé vers le soleil avec une vitesse de rotation angulaire lente autour de la direction soleil satellite en utilisant :
- des magnétocoupleurs « MTB (Magnéto Torquer Bar en anglais) » comme actionneur principal ;
- des roues à réactions pour fournir une rigidité gyroscopique afin de maintenir les performances de pointage au soleil en éclipse du soleil par la Terre malgré l'arrêt de la commande des MTB (puisque la localisation du soleil est impossible en éclipse) ;
- des senseurs solaires « CSS (Cosine Sun Sensor en anglais) » qui permettent de connaître la direction du vecteur soleil et donc le guidage du satellite ; et
- des senseurs magnétomètres « MAG (MAGnetometer)» qui permettent de mesurer le champ magnétique pour l'estimation de la vitesse angulaire satellite et la commande des MTB.

Le mode de désorbitation OCM requière une attitude satellite pointée centre Terre qui n'est pas concordant avec le guidage du mode survie SHM. En effet, la direction de poussée des tuyères « THR (THRuster)», les actionneurs servant à générer une force pour accélérer ou freiner le satellite, est en constante rotation ce qui empêche de maintenir cet axe dans le plan de l'orbite et à fortiori la maintenir colinéaire avec le vecteur vitesse satellite.

Le problème à résoudre est de contrôler le satellite afin de se placer dans les conditions adéquates pour aligner l'axe des tuyères THR avec le vecteur vitesse satellite. Un tel contrôle présuppose de mesurer l'attitude du satellite.

Des méthodes connues pour proposer une mesure d'attitude satellite utilisent des équipements tels que des senseurs stellaires « STR (Star Tracker en anglais)», des senseurs gyromètres « GYR (GYRometer en anglais) » ou des senseurs terres « IRES (Infra Red Earth Sensor en anglais)».

Par exemple, la demande de brevet US 2007/023579 A1 de Wang présente une solution de contrôle d'attitude en mode transfert utilisant des senseurs stellaires, des gyromètres.

Cependant, ces équipements ne sont pas disponibles sur une constellation de satellites en mode survie.

En effet, la constellation de satellites en vol ne possède pas de tels équipements en mode survie. Seuls des senseurs basiques mais robustes tels que les senseurs solaires CSS et les magnétomètres MAG sont disponibles. En mode survie, seul un contrôle d'attitude pointé soleil est disponible.

Les solutions existantes ne sont donc pas compatibles avec les configurations matérielles existantes de ces satellites. Par ailleurs, elles ne présentent pas un niveau de robustesse suffisant pour permettre une utilisation d'un jeu très réduit de senseurs et d'actionneurs.

Ainsi, il existe le besoin d'une solution de désorbitation d'un satellite compatible avec les équipements disponibles en mode survie.

### Résumé de l'invention

La solution proposée permet de réaliser une désorbitation satellite en orbite basse depuis le mode survie en gardant une attitude satellite pointé soleil avec une vitesse de rotation autour de la direction soleil.

Un objet de la présente invention est d'offrir une solution compatible avec la configuration matérielle des satellites déjà en vol.

Avantageusement, la présente invention ne requière pas de nouveaux équipements, ni de nouveau concept de contrôle d'attitude.

Avantageusement, la méthode de l'invention permet de réaliser de courtes manoeuvres (ou « boosts ») THR lorsque la direction de la force générée par les THR est colinéaire avec le vecteur vitesse satellite.

Avantageusement, la méthode de l'invention permet de prédire avec un jeu réduits de senseurs basiques les occurrences de boosts.

Toujours avantageusement, la méthode de l'invention permet de prédire les occurrences de boosts en éclipse du soleil par la terre quand les senseurs solaires sont indisponibles.

Pour obtenir les résultats recherchés, un dispositif tel que décrit dans la revendication indépendante 1 et un procédé tel que décrit dans la revendication indépendante 8 sont proposés.

En particulier, un dispositif de désorbitation pour satellite en mode survie comprend:
- un module d'acquisition de données apte à fournir :
   - la direction du champ magnétique terrestre et du satellite - soleil en repère satellite ; et
   - une prédiction de la direction du champ magnétique terrestre et du satellite - soleil en repère orbital local ;
- un module d'estimation d'attitude couplé au module d'acquisition de données pour déterminer l'attitude du satellite par rapport au repère orbital local, l'angle entre la direction soleil et l'axe Z satellite et la position sur orbite du satellite ; et
- un module de génération de boosts couplé au module d'estimation d'attitude pour générer des signaux aptes à activer les tuyères du satellite quand les valeurs d'attitude, d'angle et de position sont égales à des valeurs prédéfinies.

Différentes variantes d'implémentations sont décrites dans les revendications dépendantes.

### Description des figures

La Figure 1 est une représentation du principe de contrôle d'attitude d'un satellite en mode survie SHM dans une position particulière ;
La figure 2 est un schéma fonctionnel du système de désorbitation de la présente invention ;
La figure 3 est un diagramme décrivant les étapes de déclenchement de boosts selon les principes de l'invention.

### Description détaillée de l'invention

Différents aspects et avantages de l'invention vont apparaitre en appui de la description d'un mode préféré d'implémentation de l'invention.

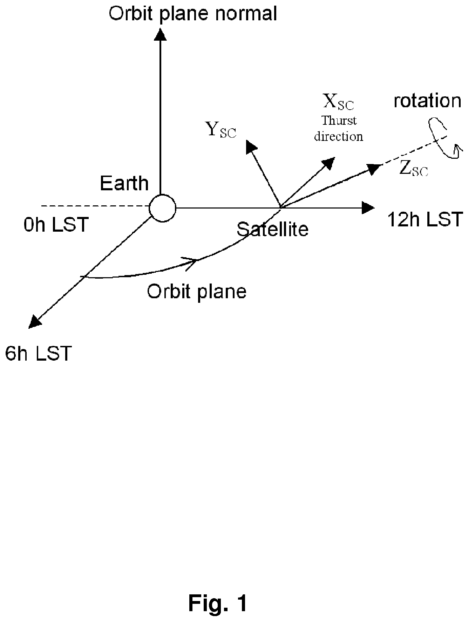

La figure 1 illustre le principe du contrôle d'attitude d'un satellite en mode survie SHM dans une position particulière du satellite.

Un satellite tel que représenté par le trièdre (Xsc Ysc Zsc) dans la figure est pointé soleil et en rotation autour de la direction soleil.

Le satellite pointé soleil signifie une direction Zsc satellite normale au panneau antenne dirigée vers le soleil.

Les tuyères peuvent générer une force colinéaire avec l'axe X satellite qui doit être maintenue dans le plan de l'orbite selon la trace orbitale du satellite. Plus précisément, la force doit être maintenue colinéaire avec le vecteur vitesse satellite. Cette situation peut se produire deux fois par orbite uniquement lorsque le satellite est en mode survie SHM.

La figure 1 illustre le moment où le satellite est à midi heure locale LST (point subsolaire). Cependant les principes décrits s'appliquent aussi pour le moment où le satellite est à minuit heure locale satellite.

La méthode de désorbitation de la présente invention permet d'accroître le demi grand axe de l'orbite en réalisant des poussées tuyères pour générer des incréments de vitesse linéaire satellite, colinéaire avec le vecteur vitesse satellite.

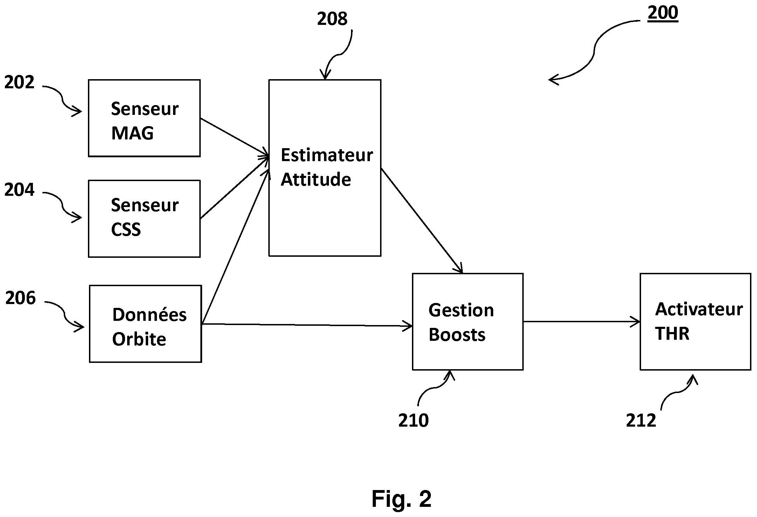

La figure 2 est un schéma fonctionnel montrant les principaux éléments constituant le système 200 de désorbitation en mode survie de la présente invention.

Le système comprend un senseur MAG 202, un senseur CSS 204, une base d'information de l'orbite satellite 206, couplés à un estimateur d'attitude 208.

Un gestionnaire de boosts 210 est couplé en entrée à l'estimateur d'attitude 208 et en sortie à un activateur THR 212.

Avantageusement, la solution proposée est compatible avec les configurations satellites existantes.

Le senseur MAG 202 fournit trois tensions images de l'amplitude du champ magnétique projetées sur les trois axes de mesure du senseur. Ces informations permettent de mesurer la direction du champ magnétique terrestre en repère satellite.

Le senseur CSS 204 capte le flux solaire reçu par le capteur du senseur et fournit un courant image de ce flux. Les mesures de courant des huit senseurs CSS permettent de reconstruire la direction satellite - soleil en repère satellite.

La connaissance à bord de l'orbite satellite ORBIT 206 permet de prédire la direction du champ magnétique et la direction satellite - soleil en repère orbital local. Ces informations sont obtenues à partir de données issues d'un système de géolocalisation « Global Positioning System (GPS) » en anglais, complété par un propagateur d'orbite « OOP On-board Orbit Propagator » en anglais. Cependant, l'utilisation d'un GPS n'est pas obligatoire, un propagateur d'orbite OOP mis à jour régulièrement depuis une station de contrôle au sol est suffisant pour alimenter ce module de prédiction de la direction soleil et du champ magnétique terrestre.

L'estimateur d'attitude 208 reçoit en entrée les informations des senseurs et du propagateur d'orbite satellite pour les traiter et calculer le phasage du vecteur de poussée satellite avec le vecteur vitesse satellite.

L'information délivrée par l'estimateur d'attitude permet au gestionnaire de boosts 210 de générer un signal qui déclenche ou non une série de boosts tuyères par l'activateur THR 212 Cet automatisme de boosts 210 est activable ou désactivable depuis le sol par l'opérateur satellite.

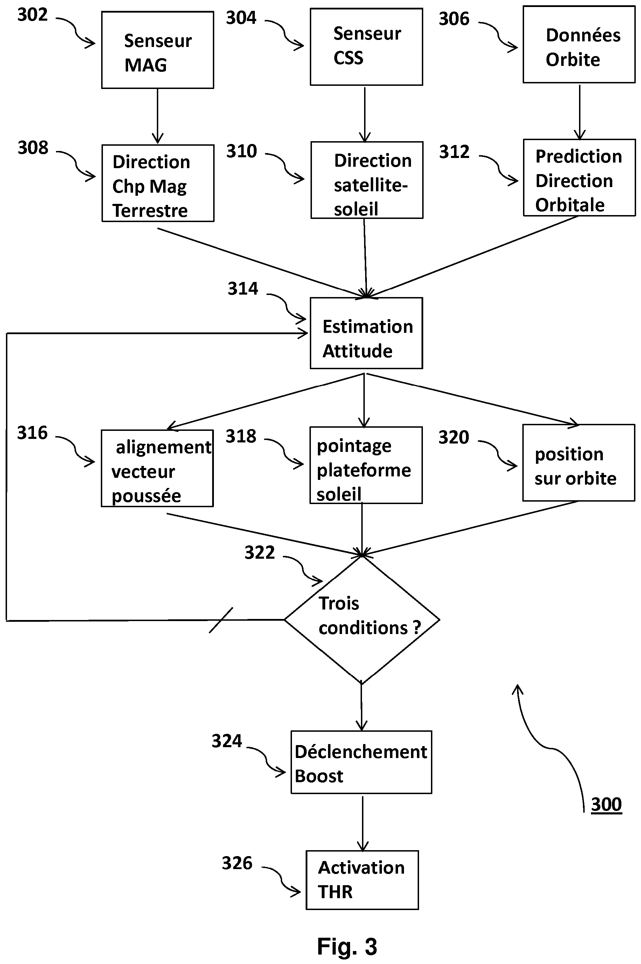

La figure 3 montre sous un diagramme de procédé les étapes qui conduisent au déclenchement de boosts selon les principes de l'invention.

Le procédé débute par les étapes 302, 304 et 306 d'acquisition de données respectivement par les senseurs MAG, CSS et ORBIT.

Au cours des étapes 308, 310 et 312 chaque senseur délivre respectivement une information de direction :
- direction du champ magnétique terrestre en repère satellite pour le senseur MAG (308);
- direction satellite-soleil en repère satellite pour le senseur CSS (310); et
- prédiction de direction du champ magnétique et du satellite en repère orbital pour l'ORBIT (312).

A l'étape 314, les informations de direction sont reçues par l'estimateur d'attitude qui les traite.

A l'étape 316, l'estimateur d'attitude génère l'information d'attitude du satellite par rapport au repère orbital local, afin de vérifier le critère d'alignement du vecteur poussée tuyères (X satellite) avec le vecteur vitesse satellite. Cette estimation est préférentiellement réalisée via un filtre de Kalman qui permet de propager ces informations en éclipse du soleil par la Terre ou la Lune suite à la non disponibilité des mesures solaires.

A l'étape 318, l'estimateur d'attitude génère une valeur de l'angle entre la direction soleil et l'axe Z satellite afin de vérifier la performance de pointage soleil.

A l'étape 320, l'estimateur d'attitude génère l'information de la position sur orbite du satellite afin de vérifier la condition de proximité du satellite par rapport aux deux positions favorables, de midi et minuit en heure locale.

L'étape 322 consiste à vérifier une triple condition à partir des trois paramètres calculés aux étapes 316, 318 et 320 précédentes. Le procédé teste :
- si le satellite a un pointage soleil satisfaisant, c'est-à-dire si l'axe Z satellite et la direction soleil ont une séparation angulaire faible (typiquement quelques degrés); et
- si l'axe de poussée THR du satellite et le vecteur vitesse linéaire du satellite ont une séparation angulaire faible (typiquement quelques degrés); et
- si la position angulaire du satellite sur l'orbite a une distance faible vis à vis d'une des deux positions sur orbite de référence (midi ou minuit LST), typiquement quelques dizaine de degrés.

Si l'une des trois conditions n'est pas satisfaite, le procédé reboucle sur l'étape 314.

Si les trois conditions sont simultanément satisfaites (performance de pointage soleil OK, phasage direction THR avec vecteur vitesse OK, position sur orbite OK), le procédé poursuit à l'étape 324 pour permettre le déclenchement de boosts tuyères.

Le procédé se termine à l'étape 326 par l'envoi de séquences d'activation THR paramétrables depuis le sol (typiquement quelques dizaines de secondes sur chaque THR).

Ainsi la présente description illustre une implémentation préférentielle de l'invention, mais n'est pas limitative. Un exemple a été choisi pour permettre une bonne compréhension des principes de l'invention, et une application concrète, mais il n'est en rien exhaustif et doit permettre à l'homme du métier d'apporter des modifications et variantes d'implémentation en gardant les mêmes principes.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique, électromagnétique ou être un support de diffusion de type infrarouge. De tells supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

1. Un dispositif (200) de désorbitation pour satellite en mode survie comprenant :
- un module d'acquisition de données (202, 204, 206) apte à fournir :
- la direction du champ magnétique terrestre et du satellite - soleil en repère satellite ; et
- une prédiction de la direction du champ magnétique terrestre et du satellite - soleil en repère orbital local ;
- un module d'estimation d'attitude (208) couplé au module d'acquisition de données pour déterminer l'attitude du satellite par rapport au repère orbital local, l'angle entre la direction soleil et l'axe Z satellite et la position sur orbite du satellite ;
- un module de génération de boosts (210) couplé au module d'estimation d'attitude pour générer des signaux aptes à activer les tuyères du satellite quand les valeurs d'attitude, d'angle et de position sont égales à des valeurs prédéfinies.

2. Le dispositif selon la revendication 1 dans lequel le module d'acquisition de données comprend :
- un senseur (202) apte à fournir la direction du champ magnétique terrestre en repère satellite ;
- un senseur (204) apte à fournir la direction satellite - soleil en repère satellite ; et
- un propagateur d'orbite (206) apte à prédire la direction du champ magnétique terrestre et la direction satellite - soleil en repère orbital local.

3. Le dispositif selon la revendication 1 ou 2 dans lequel le module de génération de boosts comprend un module pour comparer les valeurs d'attitude, d'angle et de position par rapport à des valeurs prédéfinies.

4. Le dispositif selon la revendication 4 où le module de comparaison comprend en outre un module pour déterminer si :
- l'axe Z satellite est proche de la direction soleil ;
- le satellite a un axe de poussée THR proche du vecteur vitesse linéaire ;
- le satellite est proche d'une position sur orbite de référence.

5. Le dispositif selon l'une quelconque des revendications 1 à 4 où le satellite est en orbite basse.

6. Le dispositif selon l'une quelconque des revendications 1 à 5 où le module d'estimation comprend en outre un filtre de Kalman.

7. Un satellite comprenant un dispositif selon l'une quelconque des revendications 1 à 6.

8. Un procédé pour désorbiter un satellite en mode survie comprenant les étapes de :
- acquérir (302 à 312) des données relative à :
- la direction du champ magnétique terrestre et du satellite - soleil en repère satellite ; et
- une prédiction de la direction du champ magnétique terrestre et du satellite - soleil en repère orbital local ;
- déterminer (314) l'attitude du satellite par rapport au repère orbital local, l'angle entre la direction soleil et l'axe Z satellite et la position sur orbite du satellite ;
- comparer (316 à 322) les valeurs d'attitude, d'angle et de position déterminées à des valeurs prédéfinies ; et
- générer (324) des signaux aptes à activer (326) les tuyères du satellite selon le résultat de la comparaison pour générer des incréments de vitesse linéaire satellite, colinéaire avec le vecteur vitesse satellite.

9. Un produit programme d'ordinateur, ledit programme d'ordinateur comprenant des instructions de code permettant d'effectuer les étapes du procédé selon la revendication 8, lorsque ledit programme est exécuté sur un ordinateur.

## Patentansprüche

1. Vorrichtung (200) zum Herausnehmen eines Satelliten aus dem Orbit im Überlebensmodus, die Folgendes umfasst:
- ein Datenerfassungsmodul (202, 204, 206), das Folgendes liefern kann:
- die Richtung des Erdmagnetfeldes und von Satellit-Sonne im Satellitenbezugssystem; und
- eine Vorhersage der Richtung des Erdmagnetfeldes und von Satellit-Sonne im lokalen Orbitbezugssystem;
- ein Lageschätzmodul (208), gekoppelt mit dem Datenerfassungsmodul zum Bestimmen der Lage des Satelliten mit Bezug auf das lokale Orbitbezugssystem, den Winkel zwischen der Sonnenrichtung und der Z-Achse des Satelliten und der Position auf dem Orbit des Satelliten;
- ein Boost-Erzeugungsmodul (210), gekoppelt mit dem Lageschätzmodul zum Erzeugen von Signalen, die die Düsen des Satelliten aktivieren können, wenn die Werte von Lage, Winkel und Position gleich vordefinierten Werten sind.

2. Vorrichtung nach Anspruch 1, bei der das Datenerfassungsmodul Folgendes umfasst:
- einen Sensor (202) zum Liefern der Richtung des Erdmagnetfelds im Satellitenbezugssystem;
- einen Sensor (204) zum Liefern der Richtung Satellit-Sonne im Satellitenbezugssystem; und
- einen Orbitverbreiter (206) zum Vorhersagen der Richtung des Erdmagnetfeldes und der Richtung Satellit-Sonne im lokalen Orbitbezugssystem.

3. Vorrichtung nach Anspruch 1 oder 2, bei der das Boost-Erzeugungsmodul ein Modul zum Vergleichen der Werte von Lage, Winkel und Position mit Bezug auf vordefinierte Werte umfasst.

4. Vorrichtung nach Anspruch 4, bei der das Vergleichsmodul ferner ein Modul umfasst zum Bestimmen, ob:
- die Z-Achse des Satelliten nahe der Sonnenrichtung ist;
- der Satellit eine Schubachse THR nahe dem Lineargeschwindigkeitsvektor hat;
- der Satellit nahe einer Position auf dem Referenzorbit ist.

5. Vorrichtung nach einem der Ansprüche 1 bis 4, bei der der Satellit im niedrigen Orbit ist.

6. Vorrichtung nach einem der Ansprüche 1 bis 5, bei der das Schätzmodul ferner ein Kalman-Filter umfasst.

7. Satellit, der eine Vorrichtung nach einem der Ansprüche 1 bis 6 umfasst.

8. Verfahren zum Herausnehmen eines Satelliten aus einem Orbit im Überlebensmodus, das die folgenden Schritte beinhaltet:
- Erfassen (302 bis 312) von Daten relativ zu:
- der Richtung des Erdmagnetfeldes und von Satellit-Sonne im Satellitenbezugssystem; und
- eine Vorhersage der Richtung des Erdmagnetfeldes und von Satellit-Sonne im lokalen Orbitbezugssystem;
- Bestimmen (314) der Lage des Satelliten mit Bezug auf das lokale Orbitbezugssystem, den Winkel zwischen der Sonnenrichtung und der Z-Achse des Satelliten und der Position auf dem Orbit des Satelliten;
- Vergleichen (316 bis 322) der bestimmten Werte von Lage, Winkel und Position mit vordefinierten Werten; und
- Erzeugen (324) von Signalen, die die Düsen des Satelliten aktivieren (326) können, gemäß dem Ergebnis des Vergleichs zum Erzeugen von Linearsatellitengeschwindigkeitsinkrementen kolinear mit dem Satellitengesch windigkeitsvektor.

9. Computerprogrammprodukt, wobei das Computerprogramm Code-Befehle umfasst, die das Bewirken der Schritte des Verfahrens nach Anspruch 8 zulassen, wenn das Programm auf einem Computer ausgeführt wird.

## Claims

1. A device (200) for de-orbiting a satellite in survival mode comprising:
- a data acquisition module (202, 204, 206) for providing:
- the direction of the terrestrial magnetic field and of the satellite-sun in the satellite reference frame; and
- a prediction of the direction of the terrestrial magnetic field and of the satellite-sun in the local orbital reference frame;
- an attitude estimation module (208) coupled to the data acquisition module for determining the attitude of the satellite relative to the local orbital reference frame, the angle between the sun direction and the satellite Z-axis and the position on the orbit of the satellite;
- a boost generation module (210) coupled to the attitude estimation module for generating signals capable of activating the nozzles of the satellite when the attitude, angle and position values are equal to predefined values.

2. The device according to claim 1 wherein the data acquisition module comprises:
- a sensor (202) for providing the direction of the terrestrial magnetic field in the satellite reference frame;
- a sensor (204) for providing the satellite-sun direction in the satellite reference frame; and
- an orbit propagator (206) for predicting the direction of the terrestrial magnetic field and the satellite-sun direction in the local orbital reference frame.

3. The device according to claim 1 or 2 wherein the boost generation module comprises a module for comparing the attitude, angle and position values in relation to predefined values.

4. The device according to claim 4 wherein the comparison module further comprises a module for determining whether:
- the satellite Z-axis is close to the sun direction;
- the satellite has a thrust axis THR close to the linear velocity vector;
- the satellite is close to a position on the reference orbit.

5. The device according to any one of claims 1 to 4 wherein the satellite is in a low orbit.

6. The device according to any one of claims 1 to 5 wherein the estimation module further comprises a Kalman filter.

7. A satellite comprising a device according to any one of claims 1 to 6.

8. A method for de-orbiting a satellite in survival mode comprising the steps of:
- acquiring (302 to 312) data relating to:
- the direction of the terrestrial magnetic field and of the satellite-sun in the satellite reference frame; and
- a prediction of the direction of the terrestrial magnetic field and of the satellite-sun in the local orbital reference frame;
- determining (314) the attitude of the satellite relative to the local orbital reference frame, the angle between the sun direction and the satellite Z-axis and the position on the orbit of the satellite;
- comparing (316 to 322) the determined attitude, angle and position values to predefined values; and
- generating (324) signals capable of activating (326) the nozzles of the satellite according to the result of the comparison to generate increments of satellite linear velocity, collinear with the satellite velocity vector.

9. A computer program product, said computer program comprising code instructions allowing the method steps according to claim 8 to be performed, when said program is executed on a computer.
